# EUROPEAN PATENT APPLICATION

(11) **EP 4 272 905 A1**
(43) Date of publication of application: **08.11.2023**
(21) Application number: 22172009.7
(22) Date of filing: 06.05.2022
(51) Int. Cl.: B25J 9/08

(54) **MODULAR ROBOTIC SYSTEM**

(71) Applicant: Technische Universität München, 80333 München (DE)
(72) Inventor: STEINBACH, Eckehard, 82140 Olching (DE); KARIMI, Mojtaba, 80804 München (DE); BABAIANS, Edwin, 80687 München (DE)
(74) Representative: Hoefer & Partner Patentanwälte mbB

(57) **Abstract**

The invention regards a robot module (100, 101, 102, 103, 104, 105, 106) comprising a sensor device (129) and/or an actor device (131) and/or a control interface (130) and/or power means (132) and/or wireless communication means (133), and a main board (115) including at least one connection interface (112), and a memory (124), wherein at least one connection interface (112) is adapted to receive communication data and electrical power, and at least one connection interface (112) is adapted to provide communication data and electrical power, wherein the main board (115) is adapted to, based on software and/or parameters stored in the memory (124), control the actor device (131) and/or output control data via the control interface (130) and/or process data from the sensor device (129) and/or from the control interface (130), and/or provide power from the power means via the connection interface (112) and/or communicate via the wireless communication means, and receive software data and/or parameters via the connection interface (112) and to store the software data and/or parameters in the memory (124).

## Description

### Description

The invention regards a robot module and a robot system. The robot modules allow a modular setup to configure robot systems.

Reproducibility is an important principle underpinning the scientific method. For roboticists, it is impossible to reproduce the results of other researchers because of a large variety of hardware and compatibility issues. A reproducible study replicates the same results obtained by an experiment or a study of observation or statistical analysis of a data set in a highly reliable way. In this regard, modular components can be the best solution for researchers to reproduce scientific results with high confidence. Standardization of hardware components with high flexibility enables a new paradigm of limitless design with freedom in the imagination.

A modular robotic paradigm is a system in which modules can be separated and rejoined in various configurations to construct a new design with new functionality. As a result, numerous robot architectures are conceivable for the same number of robotic modules. Based on the task to be fulfilled by the system, the user combines a given number of modules to construct the desired complex system.

In typical robotic systems such as mobile platforms or manipulators, one or more components are linked to a control system, which regulates motion and actions followed by a task specification and program. In conventional systems, a controller is a centralized device attached to the robotic system by a cross cable connection. As a result, a system built from such modules is only mechanically modular, and its reconfigurability is restricted. Since the control system electronics are centralized, the modules cannot be termed active individual units because they lack independent control processors and associated software.

Robot building components may perform various physical tasks, partially by programming the building element and partly by constructing a system of interconnected pieces of multiple types. There are several alternatives for creating the system through a range of module types.

It is an object underlying the present invention to provide a modular robot system that can be reconfigured in a simple manner. The solution of this object is provided by the features of independent claims. The dependent claims contain advantageous embodiments of the invention.

The subject invention provides a modular, expandable, programmable, networkable, and reconfigurable mechatronic prototyping system.

One aspect of the invention is the hardware part, which are mechatronic components with different sensing and actuating functionality that communicate over a connection, for example USB connection. The mechatronic kit includes multiple actuators, sensors, power, or processing modules, each including means for mechanically and electrically connecting to each other. Preferably, each module is enabled with communication chain hub, e.g. USB Gen 3.0 chain UB, where they can connect and get recognized automatically and communicate, for example over standard ROS/ROS2 (Robot Operation System) communication protocol. Each module may be reassembled and disassembled to assume a multitude of configurations. The power of each module is provided via the connection, preferably via the USB connection, which means no additional power source is needed for the modules, and they can be powered via a single power source. Preferably, each module establishes a connection over virtual Ethernet over USB and obtains a unique IP address. Further preferably, each module transmits and receives the data using standard socket-based communication using standard message passing, for example ROS messages.

Another aspect of the invention is an expandable real-time system-on-module (SoM) for each module. The modules are preferably controlled by nearly zero over-head, real-time operating system (OS) kernels responsible for task scheduling, communication, asset execution, and user interface. In a preferred embodiment, each module is capable of running the hardwaresoftware interface with low latency data rate, for example at 1 kHz. Using a web-based graphical user interface (GUI), users can load a customized configuration and assets to each module for execution. Configurations allow changing the parameters on each module, particularly in real-time. The asset can be any individual application, such as; AI model or control software, which can be loaded and executed in each module con-currently.

A robot module comprises a sensor device and/or an actor device and/or a control interface and/or power means and/or wireless communication means. The sensor device and/or actor device and/or control interface and/or power means and/or wireless communication means allows to perform a specific task for which the module is designed. For example, the robot module may be a motor module for driving the robot or parts of the robot. In another example, the module may be a measurement unit for measuring parameters from the robot's environment. Further exemplary, the module may be a power module including a power means, e.g. a battery, and/or may be a communication device including wireless communication means.

Further, the robot module comprises a main board including at least one connection interface and a memory. The main board preferably establishes the system-on-module as described above. The main board is particularly adopted to control the actor device and/or to output control data via the control interface. Additionally or alternatively, the main board is particularly adapted to process data from the sensor device and/or the control interface. Said controlling and/or outputting and/or processing is preferably based on software and/or parameters stored in the memory. Furthermore, the main board is preferably adopted to provide power from the power means via the connection interface. In another additional or alternative configuration, the main board is preferably adopted to communicate via the wireless communication means. Therefore, the robot module is particularly adapted to autonomously perform tasks without any further control logic to control the robot module. The robot module can be configured to perform different tasks by loading software and/or parameters into the memory. Thus, the robot module can be used in a very flexible manner.

The connection interface is adapted to receive and transmit communication data. Further, the power required for the robot module is provided via the connection interface. Thus, at least one connection interface is adapted to receive communication data and electrical power, particularly from another connection interface of another main board of another robot module. In addition, at least one connection interface is adapted to provide communication data and electrical power, particularly to another connection interface of another main board of another robot module. Hence, the connection interface allows coupling of several robot modules to establish a robot system. The power supply of the whole system can be connected to one of the modules and the connection interfaces of the modules supply the power to all connected modules. Same applies with communication data. The module may comprise several connection interfaces wherein at least one of them is an input and at least one is an output or a connection interface may function as both, input and output. As described above, it is a preferred embodiment to establish a virtual or actual Ethernet connection such that each main board of the connected modules has a unique address to receive communication data.

The main board is further adapted to receive software data and/or parameters via the connection interface and to store the software data and/or parameters in the memory. Each modules is preferably configurable independent from any other module. Thus, the module can perform tasks independently from any other module or control instance. The module can be provided with individual software and/or parameters to perform the required tasks. Hence, a robot system comprising several robot modules is configurable and reconfigurable in a fast and simple manner.

In a preferred embodiment, the connection interface is adapted to be connected to a computer. The main board is preferably adapted to receive software and/or parameters from the computer for storage in the memory. Hence, a computer to configure the module can simply be connected to the connection interface. In case more than one robot modules are connected to each other, the computer can be connected to one of the connected modules since the connection interfaces of the modules are adapted to provide communication data to each other. Thus, a single connection of the computer with one of the modules allows configuration of all connected modules. This is preferably achieved via a virtual Ethernet connection as described above. Setting up and configuring a robot system is thus allowed in a fast, simple and reliable manner. The computer could also be connected to receive data from the module. For example, the computer connection allows to monitor parameters of the module.

The robot module preferably comprises a housing for accommodating the main board as well as the sensor device and/or actor device and/or a control interface and/or power means and/or wireless communication means. Thus, the module is a single unit for fulfilling a respective task which is defined by the hardware configuration, i.e. the fact which of sensor device and actor device and control interface is provided and by the software and parameters stored in the memory. The common housing allows for a compact design of the module. It also allows a simple modular setup of a robot system.

Preferably, the main board is adapted to determine whether received communication data are addressed to itself. Hence, the main board is preferably adapted to identify whether or not the communication data are addressed to the main board's own address or to a different address. In case the communication data are not addressed to the main board, the main board is adapted to transmit the received communication data to another main board, which is connected to the main board via the connection interface. In this way, the module is enabled to relay messages such that communication between several connected boards is simple and reliable.

The actor device preferably includes a motor. In this chase, the module is a motor actuator module. Alternatively or additionally, the actor device comprises a gripper actuator. In this case, the module is a gripper actuator module. Further additionally or alternatively, the sensor device includes a camera, preferably a monocular camera. In this case, the module is a camera module, preferably a monocular camera module. Further additionally or alternatively, the sensor comprises an ultrasonic range finder. In this case, the module is an ultrasonic range finder module. Further additionally or alternatively, the sensor comprises an inertial measurement unit. In this case, the module is an inertial measurement module. Hence, the module can be configured in several different ways. All these different modules can solve different tasks and can be connected to each other to simply set up a modular robot.

The main board preferably comprises at least two connection interfaces. This allows to couple several modules with each other in serial connection. Preferably, the main board comprises at least three connection interfaces. This allows an even more variety of connecting several modules to each other. This allows a simple setup of a modular robot system.

The main board preferably is adapted to access a server. Further preferred, the main board is adapted to access a cloud based web interface. The connection is particularly established via the internet. Accessing the server or the cloud based web interface allows to load assets into the memory. Each asset provides a different functionality to allow the main board to control the actor device and/or output control data via the control interface and/or process data from the sensor device and/or from the control interface and/or provide power via the power means and/or communicate via the wireless communication means. By using the server or cloud based web interface, the configuration of the robot module is simplified.

The invention further regards a robot system comprising multiple robot modules as described before. The multiple robot modules are connected to each other such that each robot module is connection to another robot module. Said connection is established via the respective connection interfaces. Preferably, said connection is a wired connection. Further, the multiple robot modules are mechanically coupled via links. In this way, the robot system is set up by logically and mechanically connecting the multiple robot modules. The robot system can thus be set up modular and can be assembled, disassembled and reassembled in a simple and fast manner. Multiple robot modules particularly means at least two robot modules.

At least one connection interface of at least one of the multiple robot modules of the robot system is preferably connected to a power module. The power module is preferably a battery. The power module supplies electrical power to the connected module, wherein the connection interfaces of the module are adapted to provide power to the other connected modules. Thus, the power supply of the robot system can be provided in a simple manner. This further improves the modularity of the robot system. In a preferred embodiment, the power module is also a robot module as described above.

In a further preferred embodiment, each of the multiple robot modules has identical mounting features. The mounting features preferably are threaded holes at identical positions and/or with identical patterns. This allows a simple mechanical connection of the modules via the links. The links are provided with matching though holes such that the robot modules and the links can be connected in a modular manner to simply assembly or disassembly the robot system. Each of the multiple robot modules of the robot system preferably is an autonomous system. Thus, the number of modules of the system can be varied without influence to the other modules. In case the robot system is supposed to perform a further task, another module can simply be added. Thus, the modularity of the robot system is increased. The modules can be configured and reconfigured independently.

The present invention is related to all types of robotics, mechatronics, wearable technology, and entertainment applications. The objective of the proposed invention can be used for a variety of applications, for example:
- Education: A common use-case for the modular components is for prototyping, STEM education, and research.
- Consumer and Home: Monitoring, automation, and smart home applications.
- Health and wellness: Wearable technology, healthcare, human motion tracking, exoskeleton and human assistive systems, sport and fit-ness devices, and monitoring systems.
- Industrial: Automation, prototyping, and monitoring applications.

Further details and advantages of the invention are described together with the attached drawings. In the drawings
- Fig. 1: is a schematic view of a robot system comprising several robot modules according to an embodiment of the invention,
- Fig. 2: is a schematic view of robot modules according to the embodiment of the invention,
- Fig. 3: is a schematic view of robot modules according to the embodiment of the invention connected to a computer,
- Fig. 4: is a schematic view of robot modules according to the embodiment of the invention mechanically attached to each other according to a first exemplary setup,
- Fig. 5: is a schematic view of robot modules according to the embodiment of the invention mechanically attached to each other according to a second exemplary setup,
- Fig. 6: is a schematic view of robot modules according to the embodiment of the invention mechanically attached to each other according to a third exemplary setup,
- Fig. 7: is a schematic view of robot modules according to the embodiment of the invention mechanically attached to each other according to a fourth exemplary setup,
- Fig. 8: is a schematic exploded view of a module according to the embodiment of the invention
- Fig. 9: is a schematic overview of the logic of a main board of the robot modules according to the embodiment of the invention, and
- Fig. 10: is a schematic overview of connecting several modules according to the embodiment of the invention and a computer.

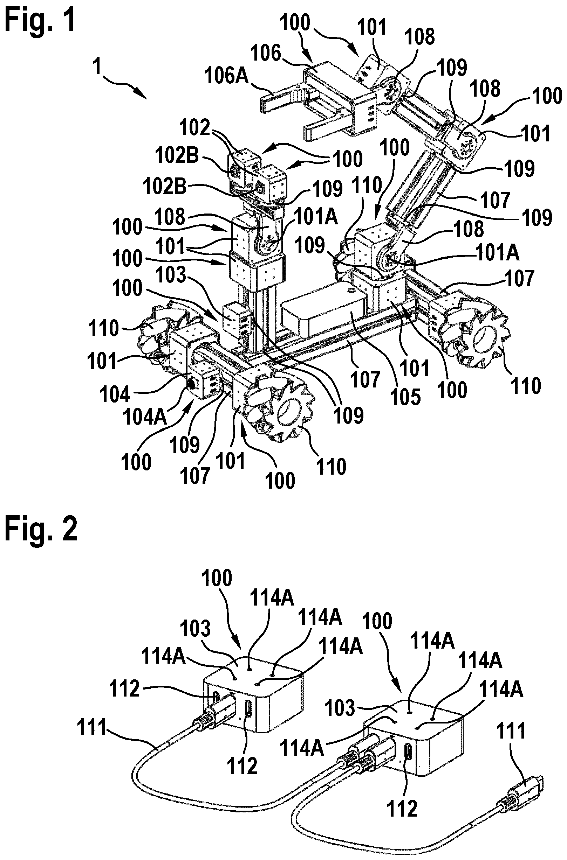

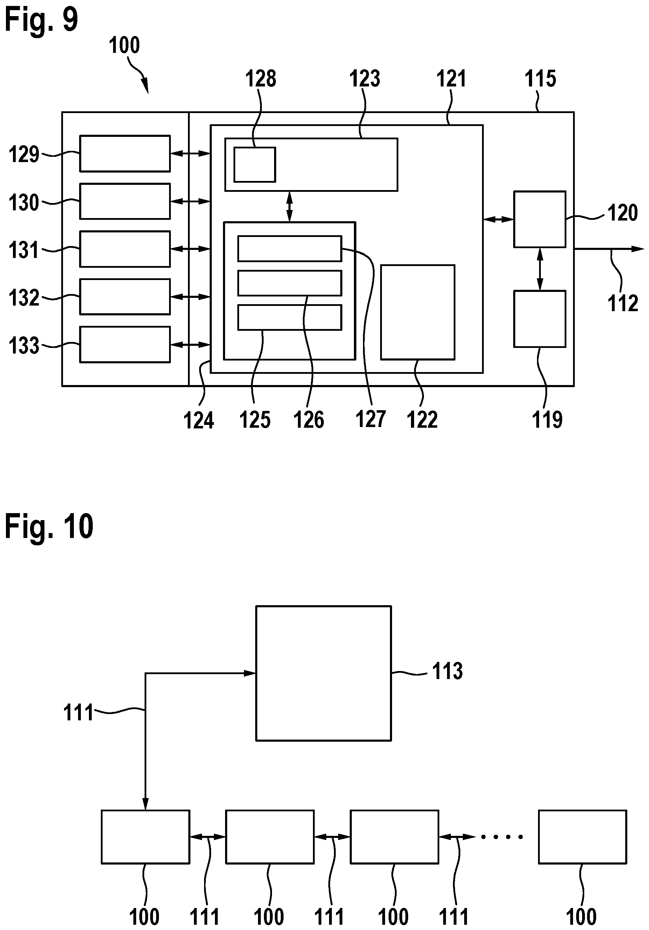

Fig. 1 is a perspective view of a robot system 1 according to an embodiment of the invention. The robot system 1 is assembled from several robot modules 100 according to an embodiment of the invention and links 107, 108, 109. In this example, a simple mobile robot platform built based on the modular components, i.e. the robot modules 100 is demonstrated. The modular components used in this example are the following:
- A motor actuator module 101 including a motor 101A. Each motor 101A can preferably be used as a servo motor or a continuous rotation motor. In the servo mode, the actuator module 101 can rotate the motor 101A to the desired orientation. Each actuator module 101 has an internal processing unit that can execute one or multiple custom software assets.
- A monocular camera module 102 comprising a camera 102B. The camera module 102 captures and provides color or grayscale images at the desired frames per second (fps). Each camera module 102 has an internal processing unit that can execute one or multiple custom software assets.
- An inertial measurement module 103 comprising an inertial measurement unit (IMU). The IMU preferably comprises of a triple-redundant 3-axis accelerometer, 3-axis gyroscope, and 3-axis magnetometer. The IMU can provide acceleration, rotational velocity, magnetic field vector, and absolute orientation concerning the earth's planar surface. Each inertial measurement module 103 has an internal processing unit that can execute one or multiple custom software assets.
- An ultrasonic range finder module 104 comprising an ultrasonic range finder 104A. The ultrasonic range finder 104A preferably includes a transmitter and receiver unit (not shown), and it provides distance to the nearby objects using the reflection of the ultrasonic signals. Each ultrasonic range finder module 104 has an internal processing unit that can execute one or multiple custom software assets.
- A gripper actuator module 106 comprising a gripper actuator 106A. Each gripper actuator module 106 has an internal processing unit that can execute one or multiple custom software assets.
- All other robot modules 100 are supplied with electrical power by a power module 105. The power module 105 includes power means 132 (cf. fig. 9), which preferably is a battery. Further preferred, the power module 105 has an internal processing unit that can execute one or multiple custom software assets.
- The robot module 100 may also be a wireless communication module (not shown) which includes a wireless communication means 133 (cf. fig. 9), which allows wireless communication with another entity. The wireless communication means 133 may also be provided in any robot module 100 as described above.

The robot modules 100 are mechanically coupled by use of several links 107, 108, 109. Standard t-slot aluminum frame links 107 are used as a frame to connect different robot modules 100 to create different structures and platforms. Hinge bracket link 108 are used to connect between a motor actuator module 101 and any other robot modules 100 or links 107, 108, 109 with a 90-degree shift angle. Further, x-bolt links 109 are used. An x-bolt link 109 is a unique bracket designed to connect any robot modules 100, links 107, 108, 109, or brackets to any other.

In this example, the robot system 1 is a vehicle. Motor actuator modules 101 are used to drive mecanum omnidirectional wheels 110.

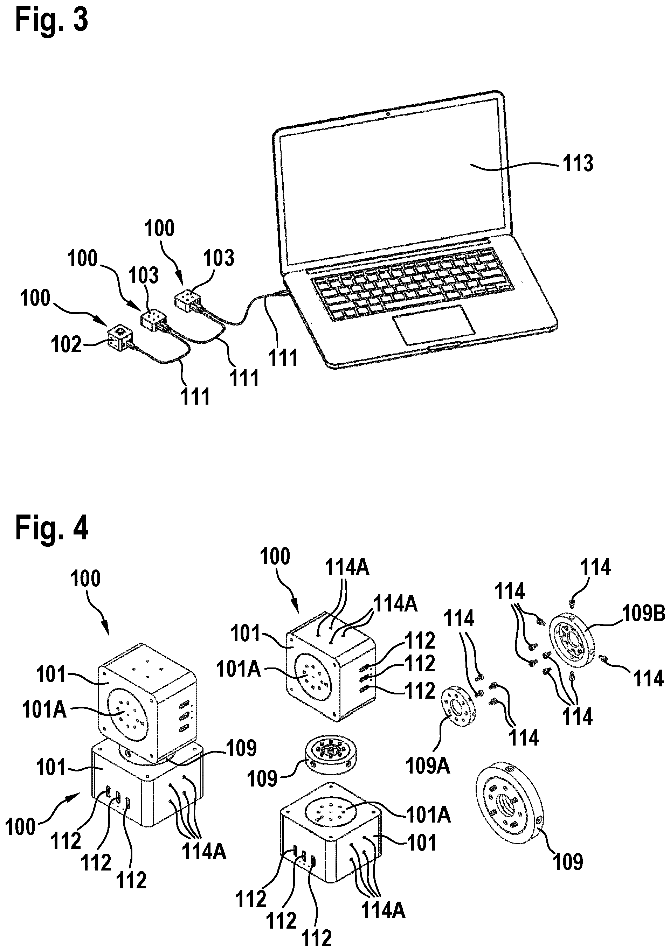

The robot modules 100 are connected to each other via cables 111 (cf. fig. 2), wherein the cables are not shown in fig. 1 for clarity reasons. Connecting the robot modules 100 is described with respect to figures 2 and 3.

Fig. 2 and fig. 3 show two and three robot modules 100, respectively. In fig. 2, two inertial measurement modules 103 are shown, in fig. 3 two inertial measurement modules 103 and a monocular camera module 102 is shown. The specific type of the robot modules 100 in the figures 2 and 3 is not relevant and the specific robot modules 100 are illustrated exemplary only.

All robot modules 100 comprise at least one, preferably at least two, more preferably at least three connections interfaces 112. The connection interfaces 112 are provided for interconnection of the robot modules 100 via cables 111. In case of two connection interfaces 112 per robot module 100, a "chain" of robot modules 100 can be created. In case of three or more connection interfaces 112 per robot module 100, a more flexible cable connection between the robot modules 100 can be established. Preferably, one of the communication interfaces 112 functions as data and energy input, whereas the other communication interfaces 112 function as energy and data output.

The connection interface 112 is adapted to receive communication data and electrical power. Further, the connection interface 112 is adapted to provide communication data and electrical power. Communication data and electrical power are preferably received from another connection interface 112 of another robot module 100 and are preferably provided to another connection interface 112 of another robot module 100. That means that electrical power directly provided to one of the robot modules 100 by connecting a power module 105 is also provided to all other connected robot modules 100 via the connection interfaces 112. Same preferably applies to communication data. Therefore, a computer 113 for configuration of all the connected robot modules 100 can be connected to one of the robot modules 100 as shown in fig. 3. Thus, the robot system 1 can be assembled in a very simple manner.

The connection between the robot modules 100 is preferably a USB-3.0 based connection. Therefore, USB-3.0 cables 111 are adopted to establishes the power and the data connection between two robot modules 100 or one robot module 100 and the external computer 113.

For mechanical connection of the robot modules 100 via the links 107, 108, 109, the robot modules 100 all comprise standardized threaded holes 114A, which are arranged in a standardized pattern. Thus, all the different links 107, 108, 109 can simply be mounted to the robot modules 100 to allow fast and simple assembly of different robots. The robot system 1 is thus a simple modular system.

Figures 4 to 7 are schematic views of different exemplary setups of the robot system 1. Particularly, a hardware assembly of different robot modules 100 using the links 107, 108, 109 is shown. In fig. 4, two robot modules 100 are joined via an x-bolt link 109 Using this x-bolt link 109, any two robot modules 100, any robot module 100 and a bracket, any robot module 100 and link 107, 108, 109, and any two brackets or links 107, 108, 109 can be mounted together.

The x-bolt link 109 comprises a first part 109A and a second part 109B, which can individually be connected to the two robot modules 100 via the threaded holes 114A of the robot modules 100 and screws 114. Afterwards, the first part 109A and the second part 109B can be connected and fixed via screws 114 to establish a mechanical connection between the two robot modules 100.

In fig. 4, it is exemplary shown to connect two motor actuator modules 101 via the x-bolt link 109. Particularly, the motor 101A of one motor actuator module 101 is connected to another motor actuator module 101 such that the other motor actuator module 101 can be rotated via the motor 101A. However, the x-bolt link 109 can also be used to establish other connections as shown in fig. 1.

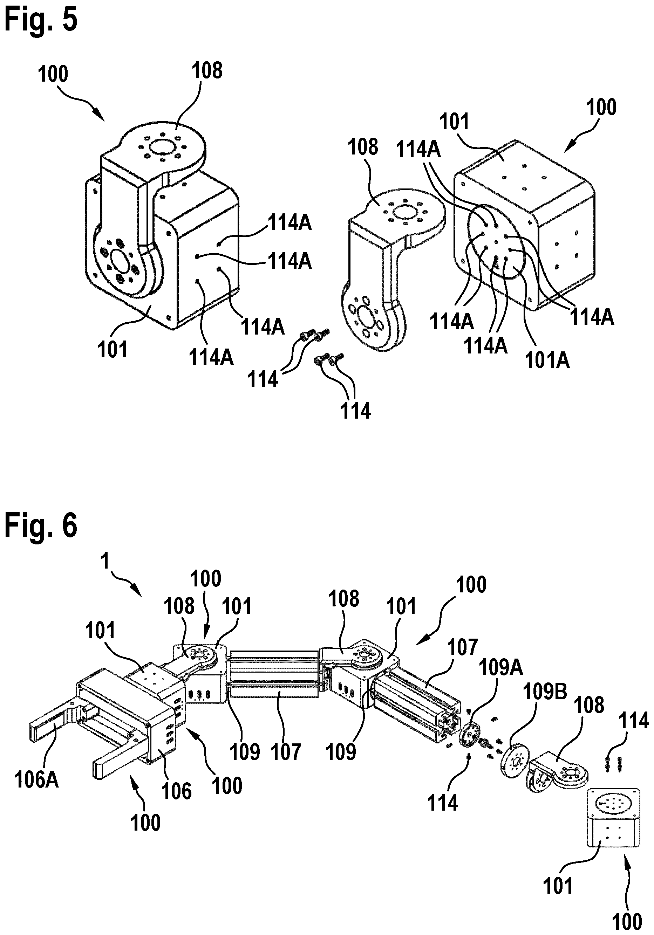

Fig. 5 is a schematic view of an assembly of different robot modules 100 using the hinge bracket link 108. Using the hinge bracket link 108, any two robot modules 100, any robot module 100 and a bracket, any robot module 100 and link 107, 108, 109, and any two brackets or links 107, 108, 109 can be mounted together.

In fig. 5, it is exemplary shown to connect the hinge bracket link 108 to the motor 101A of a motor actuator module 101. The connection is established via the threaded holes 114A of the motor actuator module 101 and screws 114. However, the hinge bracket link 108 can be used to establish other connections as shown in fig. 1.

Fig. 6 shows the assembly of a typical 3-DoF manipulator using some of the above described robot modules 100 and links 107, 108, 109. A gripper actuator module 106 is connected to a motor actuator module 101 to allow rotation of the gripper actuator module 106 via the motor 101A of the motor actuator module 101. The motor actuator module 100 is connected via a hinge bracket link 108 to another motor actuator module 100 such that the assembly of gripper actuator module 106 and motor actuator module 101 can be pivoted by use of the other motor actuator module 101. Via x-bolt links 109, frame links 107 and further hinge bracket links 108, two other motor actuator module 101 are coupled for increasing the movability of the robot system 1 to achieve the desired degrees of freedom.

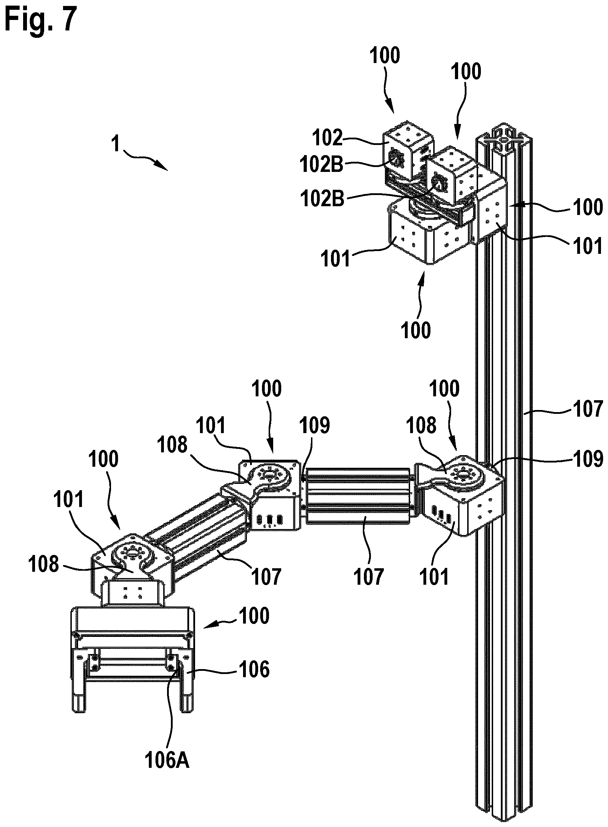

Fig. 7 shows the assembly of a different example platform using some of the above described robot modules 100 and links 107, 108, 109. In this robot system 1, the assembly as shown in fig. 5 is mounted to a frame link 107 via an x-bolt link 109, wherein further robot modules 100 are also mounted to said frame link 107. These further robot modules 100 are two motor actuator modules 101 and two monocular camera modules 102, which allow sensing the environment.

In all the figures 4 to 7, the cables 111 for connecting the robot modules 100 are not shown for clarity reasons.

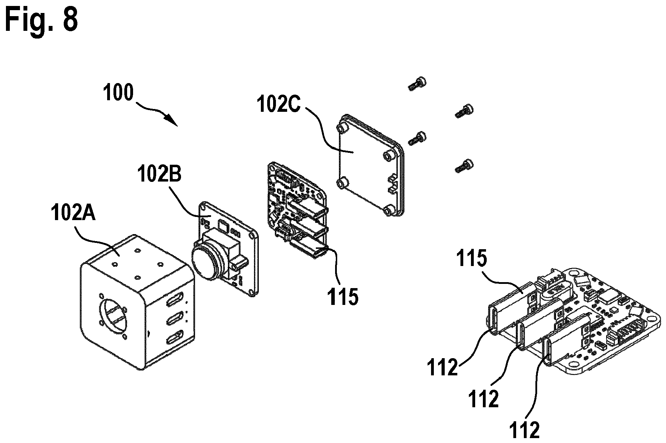

Fig 8 is a schematic exploded view of the example construction of a single robot module 100. Specifically, a monocular camera module 102 is shown. Each module 100 comprises a housing 102A, 102B with a main box 102A and a cover 102B. Further, a main board 115 is provided which establishes a System-On-Module (SoM).

The robot module 100 also has a sensor device129 and/or actor device 131 and/or a control interface, which preferably is a general purpose input and output interface (GPIO) 130, and/or a power means 132 and/or wireless communication means 133. In this regard, the type of the robot module 100 is defined. In the shown example, a camera 102B is provided such that the robot module 100 is the monocular camera module 102. Instead of the camera 102B, an inertial measurement unit could be provided such that the robot module 100 is the inertial measurement module 103.

The main board 115 is the heart of every robot module 100 and is also regarded as SoM board. As shown in figure 8, the main board 115 includes the connection interfaces 112. A schematic overview of the main board 115 is shown in fig. 9.

Fig. 9 is a schematic overview of an robot module 100 and particularly the main board 115. Each main board 115 includes of a Data Processing Unit (DPU) 121, the connection interfaces 112, which preferably are USB 3.0 controller and connectors, a Power Control Unit PCU 119, and chain manager unit 120, plus the additional electronics. The DPU 121 is particularly based on an ARM Cortex Processor System-in-Package (SiP). Based on the specific application of the robot module 100, the main board 115 can also be equipped with multiple sensor devices 129 and/or general-purpose input or output interfaces 130 and/or actor devices 131. The main board 115 can alternatively comprise interfaces to control these devices.

Each main board 115 further has an internal processor 123 and memory 124 that can handle all the tasks of the robot module 100. By default, each robot module 100 preferably provides the minimum functionality of the specific task for the robot module 100. Users preferably can change the main functionality of the robot module 100 based on running node scripts or assets.

The main board 115 preferably further comprises a communication interface 122 including a driver interface layer for handling a Virtual Ethernet communication over USB. The Remote Network Driver Interface Specification (RNDIS) is a protocol used on top of USB, and it provides a virtual Ethernet link on the host device operating systems, which is preferably adopted in the main board 115. The central processor 123 preferably handles the tasks and assets. The processor 123 preferably runs the real-time operating system and manages the memory 124, communication interface 122, and peripheral devices.

In the main memory 124 of the main board 115, the core operating system, assets 127, parameters, and additional algorithms 125 are stored. Algorithms 125 in the memory can contain process structure and the neural model. The neural models are trained in a host computer and stored as a final model in the memory 124. The processor 123 uses the saved models and executes the models using the assets 127. The memory stores data126 which mainly contains parameters, for example the calibration parameters, and settings of the system.

Assets 127 are individual programs that can be run in the processor 123. Unlimited assets 127 can be loaded into the robot module 100 considering the limitations of the memory 124. The processor 123 can run each asset in a dedicated process using an operating system scheduler. Users can upload their assets 127 into the system using a graphical web interface.

The processor 123 further comprises a Device Communication Manager (DCM) 128, which is the default core asset running in real-time with the highest priority. This asset 127 manages the driver of the peripheral devices connected to the processor 123. The DCM 128 manages all the settings, sensory data reading, and the graphic user interface.

As explained above, the robot module 100 can be configured in different manners to solve different tasks:
- Based on the functionality of the robot module 100, different sensor devices 129 can be connected to the DPU 121 with a dedicated interface and communication protocol such as I2C, Serial, CAN, USB, etc.
- A General Purpose Input and Output (GPIO) interface 130 can be provided for nonstandard device management. The DCM 128 will control the GPIO 130 based on the running assets 127.
- Based on the robot module's 100 functionality, the main board 115 can be connected to up to four DC motor drivers. The DCM 128 will handle the low-level control of the motor driver, and assets 127 can be executed to apply different control models based on the application.

The main board 115 preferably provides a web-based GUI interface, which can be used on the computer 113 to access each robot module 100. As described above, a virtual Ethernet network is preferably established. Further preferred, the Internet Protocol is adopted for communication such that each robot module 100 has an unique IP address. The robot module can thus be accessed via the IP address.

The assets 117 can be managed via a cloud-based digital twin environment. As each robot module 100 obtains a unique IP address, a user can use the browser and, by typing the IP address of the robot module 100, can visualize the GUI of the component. The web-based GUI is used for five main purposes:
- To visualize the real-time status of the robot modules 100.
- To change the configuration and settings of the robot module 100.
- To enable the recording and downloading of data recorded by the robot module 100.
- To load assets 127 into the robot module 100 and execute, change, or manage them inside the robot module 100.
- To add or modify the real-time node script that can be executed on the robot module 100.

The idea of the cloud-based web interface to manage assets is similar to an app store for smartphones where users can download an asset 127 (application, theme, configuration, etc.) and install them on the robot module 127. Adding new assets can add more functionality to a robot module 100 or change the core functionality of the robot module 100. Users can share, sell, or buy new assets 127 for different robot modules 100. Assets 127 can be categorized in multiple sections: fusion software, filtering software, control software, Al-Based algorithms, and perception software.

For example, take the inertial measurement module 103, and by default, the inertial measurement module 103 provides raw sensor data for acceleration and rotational speed. Now consider an asset 127 that can detect the number of footsteps for human walking/running activity using the raw IMU data of the inertial measurement module 103. Loading this asset 127 into the inertial measurement module 103 leads to the inertial measurement module 103 executing the application inside the module's processor 123 and providing the number of footsteps and the raw sensory data.

The robot module 100 may comprise a wireless communication means 133, which allows the main board 115 to communicate with other entities in wireless manner. In case the robot module 100 is a power module 105, a power means 132, e.g. a battery, is provided. The main board 115 is adapted to output the power from the power means 132 via the connection interface 112 to supply other robot modules 100 with electrical energy.

Fig. 10 shows the chaining of multiple modules 100 and connection to the host computer. Each robot module 100 obtains a unique IP address and can communicate to other robot modules 100 and the host computer 113.

### List of reference numerals

1 robot system
100 module
101 motor actuator module
101A motor
102 monocular camera module
102A, 102C housing
102B camera
103 inertial measurement module
104 ultrasonic range finder module
104a ultrasonic range finder
105 power module
106 gripper actuator module
106a gripper actuator
107 frame link
108 hinge bracket link
109 x-bolt link
109A first part
109B second part
110 mecanum omnidirectional wheel
111 cable
112 connection interface
113 computer
114 screw
114A threaded holes
115 main board
116 graphical user interface (GUI)
117 web interface
119 power control unit (PCU)
120 chain manager unit
121 data processing unit (DPU)
122 communication interface
123 processor
124 memory
125 algorithm
126 data
127 assets
128 device communication manager (DCM)
129 sensor device
130 control interface / general purpose input and output interface (GPIO)
131 actuator device motor
132 power means
133 wireless communication means

## Claims

1. Robot module (100, 101, 102, 103, 104, 105, 106) comprising
• a sensor device (129) and/or an actor device (131) and/or a control interface (130) and/or power means (132) and/or wireless communication means (133), and
• a main board (115) including
∘ at least one connection interface (112), and
∘ a memory (124),
• wherein at least one connection interface (112) is adapted to receive communication data and electrical power, and at least one connection interface (112) is adapted to provide communication data and electrical power,
• wherein the main board (115) is adapted to
∘ based on software and/or parameters stored in the memory (124), control the actor device (131) and/or output control data via the control interface (130) and/or process data from the sensor device (129) and/or from the control interface (130), and/or provide power from the power means via the connection interface (112) and/or communicate via the wireless communication means, and
∘ receive software data and/or parameters via the connection interface (112) and to store the software data and/or parameters in the memory (124).

2. Robot module (100, 101, 102, 103, 104, 105, 106) according to claim 1, **characterized in that** the control interface (112) is adapted to be connected to a computer and the main board (115) is adapted to receive software and/or parameters from the computer for storage in the memory (124).

3. Robot module (100, 101, 102, 103, 104, 105, 106) according to any one of the preceding claims, **characterized by** a housing (102A, 102C) for accommodating the main board (115) and the sensor device (129) and/or actor device (131) and/or a control interface (130).

4. Robot module (100, 101, 102, 103, 104, 105, 106) according to any one of the preceding claims, **characterized in that** the main board (115) is adapted to determine whether received communication data are addressed to itself and when not to transmit the received communication data to another main board (115), which is connected to the main board (115) via the connection interface (112).

5. Robot module (100, 101, 102, 103, 104, 105, 106) according to any one of the preceding claims, **characterized in that** the actor device (131) includes a motor and/or a gripper actuator (106a) and/or the sensor device includes a camera (102a), preferably a monocular camera, and/or an ultrasonic range finder (104a) and/or an inertial measurement unit.

6. Robot module (100, 101, 102, 103, 104, 105, 106) according to any one of the preceding claims, **characterized in that** the main board (115) comprises at least two connection interfaces (112), preferably at least three connection interfaces (113).

7. Robot module (100, 101, 102, 103, 104, 105, 106) according to any one of the preceding claims, **characterized in that** the main board (115) is adapted to access a server, preferably a cloud based web interface, to load assets (127) into the memory (124), wherein each asset (127) provides a different functionality to allow the main board (115) to control the actor device (131) and/or output control data via the control interface (130) and/or process data from the sensor device (129) and/or from the control interface (130).

8. Robot system (1) comprising multiple robot modules (100, 101, 102, 103, 104, 105, 106) according to any one of the preceding claims, wherein each of the multiple robot modules (100, 101, 102, 103, 104, 105, 106) is connected, preferably wired, to another one of the multiple robot modules (100, 101, 102, 103, 104, 105, 106) via the respective connection interfaces (112) and wherein the multiple robot modules (100, 101, 102, 103, 104, 105, 106) are mechanically coupled via links (107, 108, 109).

9. Robot system (1) according to claim 8, **characterized in that** at least one connection interface (112) of at least one of the multiple robot modules (100, 101, 102, 103, 104, 105, 106) is connected to a power module (105), preferably a battery.

10. Robot system (1) according to claim 8 or 9, **characterized in that** each of the multiple robot modules (100, 101, 102, 103, 104, 105, 106) has identical mounting features, preferably threaded holes (114a) at identical positions and/or with identical patterns.
